# FASCICULE DE BREVET EUROPEEN

(11) **EP 0 419 321 B1**
(45) Date de publication et mention de la délivrance du brevet: **17.01.1996**
(21) Numéro de dépôt: 90402504.6
(22) Date de dépôt: 12.09.1990
(51) Int. Cl.: B32B 17/10, C03C 27/12, H05B 3/26

(54) **Vitrage feuilleté chauffant**
Heizbare Verbundglasscheibe
Laminated heating glass

(30) Priorité: 18.09.1989 FR 8912170
(43) Date de publication de la demande: 27.03.1991
(73) Titulaire: SAINT-GOBAIN VITRAGE, F-92400 Courbevoie (FR)
(72) Inventeur: Jourdaine, Loic, F-60190 Hemevillers (FR)
(74) Mandataire: Luziau, Nelly

(56) Documents cités:
- EP-A- 0 241 337
- WO-A-88/01230
- GB-A- 1 205 271
- US-A- 3 398 040
- US-A- 4 010 304
- US-A- 4 154 638
- US-A- 4 294 881

## Description

La présente invention concerne un vitrage feuilleté chauffant, en particulier un vitrage feuilleté comprenant un support monolithique ou feuilleté, en verre et/ou en matière plastique, et une feuille de matière plastique transparente comprenant au moins une couche de polyuréthane, notamment une couche de polyuréthane présentant des propriétés d'absorbeur d'énergie.

Des feuilles de matière plastique transparentes, pouvant être appliquées par pression à chaud sur une face de ces supports ont déjà été décrites, notamment au brevet français 2 398 606. Selon ce brevet, la feuille comprend deux couches, l'une formée d'une matière thermoplastique présentant des propriétés d'absorbeur d'énergie et adhérant à la surface du support en verre ou en matière plastique et l'autre étant formée d'une couche thermodurcissable présentant des propriétés d'antilacération et d'autocicatrisation.

Ces vitrages sont utilisables notamment comme pare-brise, lunettes arrières de véhicules automobiles ou comme vitrages pour le bâtiment.

Ces vitrages, quand ils sont utilisés dans des véhicules automobiles, sont fixés généralement par collage dans la baie de ces véhicules.

Pour protéger l'adhésif, servant à fixer ces vitrages, des rayonnements UV et pour le rendre non visible de l'extérieur, la face du support recouverte de la couche thermoplastique porte généralement, sur sa périphérie, une bordure émaillée, comme indiqué dans le brevet français 2 595 983.

On connait aussi de la publication de brevet EP-A-0 241 337 la fabrication d'un vitrage feuilleté comprenant un support monolithique ou feuilleté en verre et/ou en matière plastique présentant sur une face une bordure émaillée et une feuille de matière plastique comprenant au moins une couche de polyuréthane. Ce brevet est orienté vers l'utilisation d'un primaire en vue d'améliorer l'adhésion périphérique de la feuille de matière plastique avec la bordure émaillée.

Ces vitrages sont, jusqu'à présent, non chauffants. Les vitrages chauffants habituels sont des vitrages feuilletés à deux plaques de verre entre lesquelles sont insérées une feuille de matière plastique transparente, un revêtement électroconducteur et des bandes d'amenée du courant. Ces différents éléments sont fortement maintenus par les deux plaques de verre.

Il apparait avantageux d'avoir des vitrages feuilletés à une seule plaque de verre, décrits précédemment, notamment parce que ces vitrages munis seulement d'une feuille de matière plastique transparente sous forme bi-couche, c'est-à-dire comprenant une couche de matière thermoplastique et une couche de matière thermodurcissable, présentent des avantages par rapport aux vitrages feuilletés à deux plaques de verre. Un des avantages est qu'on peut donner au vitrage feuilleté à une seule plaque de verre des formes très diverses, voire complexes, par bombage, par le fait qu'une seule plaque de verre est à traiter. Dans le cas des vitrages feuilletés à deux plaques de verre, ces deux plaques doivent être bombées et obtenir des formes s'épousant parfaitement n'est pas d'une réalisation facile.

Un des problèmes qui peut se poser avec les vitrages feuilletés chauffants à un seul support est leur stabilité mécanique, étant donné que les différents éléments intermédiaires ne sont maintenus que par un support, tel que le verre, et une feuille de matière plastique.

On connait de la publication de brevet GB-A-1 205 271 un vitrage comprenant un substrat en verre, une couche métallique ou d'oxyde métallique, éventuellement électroconductrice et un revêtement en matière plastique comme des polymères vinyliques

Pour réduire un effet miroir du à la couche métallique, la surface du substrat au contact avec cette couche est rugueuse.

La présente invention a donc pour but un vitrage feuilleté chauffant, résistant mécaniquement, comprenant un seul support, par exemple en verre, et une feuille de matière plastique transparente comprenant au moins une couche de polyuréthane, de préférence à propriété d'absorbeur d'énergie, pour être utilisé comme vitrage dit de sécurité.

Un vitrage feuilleté pour véhicule automobile selon l'invention est formé d'un support monolithique ou feuilleté, en verre et/ou en matière plastique, présentant sur une de ses faces une bordure émaillée colorée, un revêtement électroconducteur constitué par une couche de SnO₂ dopé ou d'oxyde d'indium-étain ou par un empilement de couches minces comprenant essentiellement une couche métallique tel que l'argent insérée entre deux couches diélectriques, des moyens d'amenée du courant électrique et une feuille de matière plastique transparente comprenant au moins une couche de polyuréthane.

En particulier, le support peut être en verre clair ou coloré.

La bordure d'émail peut être constitué en une matière conductrice de l'électricité.

Les moyens d'amenée du courant électrique peuvent être formés de bandes conductrices, notamment à l'argent, sérigraphiées et/ou des clinquants métalliques.

La feuille de matière plastique peut être une bicouche comprenant une couche de matière thermoplastique à propriété d'absorbeur d'énergie et une couche thermodurcissable à propriété d'antilacération et d'autocicatrisation.

Les supports utiles pour les vitrages selon l'invention peuvent être constitués par des feuilles uniques de verre ou bien par des stratifiés formés de feuilles de verre reliées entre elles par une couche intercalaire en matière plastique. Les supports peuvent être aussi en matière plastique comme du polycarbonate, des polymères acryliques, du polychlorure de vinyle, du polystyrène, des esters cellulosiques.

Lorsque le support est en verre, il peut être formé d'un verre silico-sodo-calcique utilisé classiquement pour les vitrages automobiles et pour les bâtiments. Il peut s'agir d'un verre clair, c'est-à-dire non coloré, présentant une transmission lumineuse importante, par exemple supérieure à 90 % sous une épaisseur de 4 mm. Il peut s'agir aussi, d'un verre coloré dans sa masse apte à procurer un confort d'été accru pour les passagers du véhicule ou du local équipé de tels verres, du fait de son facteur de transmission énergétique réduit. D'une manière générale, pour les vitrages pour automobiles, on choisit le verre, constituant le support, pour respecter les réglementations, c'est-à-dire un verre ayant une transmission lumineuse (TL) d'au moins 75 % ou 70 % suivant les législations.

Comme verre coloré, on peut utiliser du verre dit "TSA" contenant Fe₂O₃, dans des proportions pondérales de l'ordre de 0,55 à 0,62 %, FeO pour environ 0,11 à 0,16 %, ce qui conduit à un rapport Fe²⁺/Fe³⁺ de l'ordre de 0,19 à 0,25, CoO pour moins de 12 ppm et même de préférence pour moins de 10 ppm.

Il en résulte des propriétés, par exemple pour une épaisseur de 3,85 mm, de transmission lumineuse (T_{L}) élevée voisine de 78 %, un facteur énergétique de transmission (T_{E}) relativement bas et voisin de 60, ce qui conduit à un rapport T_{L}/T_{E} de l'ordre de 1,30.

On peut aussi utiliser comme verre coloré, en particulier lorsque la réglementation n'impose qu'une transmission lumineuse de 70 %, un verre un peu plus coloré que le "TSA", mais présentant par contre une transmission lumineuse un peu plus faible, à savoir un "TSA²⁺".

Ce "TSA²⁺" est coloré par les mêmes oxydes que précédemment mais dans des proportions légèrement différentes.

Ainsi les proportions d'oxydes métalliques sont les suivantes :
- Fe₂O₃ :: approximativement compris entre 0,75 et 0,90 %
- FeO :: approximativement compris entre 0,15 et 0,22 % soit Fe²⁺/Fe³⁺ = 0,20 environ
- CoO :: inférieur à 17 ppm et même de préférence inférieur à 10 ppm
Il en résulte pour ce verre "TSA²⁺", en 3,85 mm d'épaisseur les propriétés suivantes :
- T_{L} :: de l'ordre de 72 %
- T_{E} :: de l'ordre de 50 %
Ce qui conduit à un rapport T_{L}/T_{E} de l'ordre de 1,40 ou 1,50.

Le revêtement électroconducteur est constitué par une couche d'oxyde d'étain dopé ou une couche d'oxyde d'indium étain (ITO), ou par un empilement de couches minces comprenant essentiellement une couche de métal conducteur comme l'argent, inséré entre deux couches diélectriques, comme l'oxyde d'étain, comme il est décrit par exemple à la demande de brevet européen A-230 188. Ces couches peuvent être obtenues par différentes méthodes de formation de couches minces, par exemple méthode sous vide (évaporation thermique, pulvérisation cathodique, magnétron,...), pyrolyse (à partir de composés sous forme de solution ou suspension, sous forme de poudre, sous forme de vapeur), trempage.

Des revêtements électroconducteurs particulièrement préférés sont des couches d'ITO pyrolysées obtenues à partir de composés en poudre, (composé d'étain comme l'oxyde de dibutylétain et composé d'indium en particulier le formiate d'indium), décrits par exemple aux brevets EP-A-192 009 et FR 2 625 754.

Ces couches peuvent être formées en utilisant des dispositifs tels que ceux décrits aux brevets européens 125 513, 130 919, 191 258, 189 709 et 188 962.

Ces couches, outre leur homogénéité, présentent de bonnes propriétés électriques et sont stables mécaniquement.

Avantageusement, la couche d'ITO a une épaisseur de l'ordre de 180 nm, ce qui lui confère une résistance par carré de l'ordre de 10 ohms. Elle peut aussi avoir une épaisseur d'au moins 330 nm, ce qui lui confère une résistance par carré égale ou inférieure à 5 ohms. De préférence, la couche d'ITO a une épaisseur de 350-380 nm ce qui lui permet de présenter une résistance par carré de l'ordre de 4,5-4,0 ohms.

Pour ces épaisseurs, la couche d'ITO a une couleur bleu-vert ou verte en réflexion, couleur qui est appréciée pour les vitrages d'automobiles.

Selon les vitrages souhaités, on peut jouer sur l'épaisseur, la couleur du support de verre, les matières plastiques associées et/ou sur l'épaisseur de la couche d'ITO.

Pour améliorer la conduction électrique des couches minces électroconductrices d'ITO, on peut leur faire subir, après dépôt, un traitement thermique, comme il est décrit, par exemple, aux demandes de brevet européen A-192 009 et A-278 836.

Ce traitement thermique de la couche peut être effectué, sous une pression normale ou réduite, en atmosphère de préférence neutre ou réductrice, par exemple sous atmosphère de H₂ ou de N₂ ou encore sous un mélange H₂ + H₂. Ce traitement peut encore se faire sous vide. Ce traitement thermique s'effectue à une température inférieure à celle du dépôt de la couche électroconductrice, à savoir à une température inférieure à 400°C. De préférence la température de traitement s'échelonne entre 250 et 350°C.

Ainsi, un vitrage automobile utilisable dans l'invention peut être réalisé avec un support en verre "TSA" d'épaisseur 3 mm, recouvert d'une couche ITO d'épaisseur de l'ordre de 350-380 nm ou de l'ordre de 180 nm. Avec l'épaisseur de couche de 180 nm, l'épaisseur de verre "TSA" peut être légèrement plus importante, et atteindre jusqu'à 3,5 ou 4 mm. Il en résulte un vitrage de couleur très légèrement verte en transmission, verte en réflexion ayant un T_{L} compatible avec la réglementation auto (plus de 75 %) et un T_{E} de l'ordre de 1,40.

Si l'on veut employer du verre "TSA²⁺" à la place du verre "TSA", en ayant des coefficients de transmission lumineuse compatibles avec les réglementations, on peut choisir un support en verre "TSA²⁺" de 3 mm d'épaisseur, et une couche d'ITO ayant une épaisseur de 180 nm. Il en résulte alors, pour le vitrage fini, un coefficient T_{L} supérieur à 70 %, un coefficient T_{E} de l'ordre de 1,50, c'est-à-dire une transmission énergétique réduite et donc un confort d'été amélioré.

Bien entendu, des vitrages avec des épaisseurs de verre inférieures à celles énoncées ci-dessous, sont à fortiori possibles puisque cela permet d'augmenter la transmission lumineuse et qu'en conséquence les réglementations restent satisfaites.

Le dépôt d'émail sur la périphérie du support du vitrage sert à masquer, de l'extérieur, les amenées de courant ainsi que la colle éventuelle servant à fixer les vitrages dans la baie de la carrosserie de l'automobile.

Il sert aussi à protéger la colle de l'action néfaste du soleil. On peut utiliser tout émail connu. Il est, de préférence, de couleur sombre, avantageusement noir. Son épaisseur peut varier. Elle est, en général, de 15 à 25 µm et peut atteindre 40 µm. La couche d'émail déposée par sérigraphie est séchée par exemple par exposition aux UV, aux IR ou aux microondes, puis elle est généralement recuite avant l'application des couches suivantes.

C'est notamment le cas lorsque le revêtement électroconducteur lui-même ou l'empilement de couches minces auquel il appartient, venant au contact de cette couche d'émail, est déposé sous vide.

Lorsque le revêtement électroconducteur est déposé par pyrolyse après la formation de la couche d'émail, la cuisson de l'émail est effectuée pendant la phase de chauffage du support de verre qui est généralement porté à une température de l'ordre de 600°C pour permettre la pyrolyse dans de bonnes conditions.

Lorsque la couche d'émail, après séchage, est recouverte d'une bande conductrice à l'argent, la cuisson de la couche d'émail et de la bande conductrice peut être effectuée simultanément.

Si la bande conductrice à l'argent est formée à partir d'une composition non compatible avec l'émail coloré, il peut être souhaitable de cuire la couche d'émail avant d'appliquer la bande conductrice à l'argent, notamment parce que l'argent peut diffuser dans la couche d'émail qui est poreuse.

La couche d'émail peut être éventuellement conductrice de l'électricité.

Pour alimenter électriquement le revêtement électroconducteur, on peut utiliser des bandes d'amenée de courant qui peuvent être des bandes conductrices du type sérigraphiées à base d'argent par exemple.

Les bandes conductrices, du type à base d'argent qui sont déposées par sérigraphie sont connues, notamment dans les vitrages feuilletés chauffants, utilisés généralement dans les automobiles, et qui comprennent deux feuilles de verre entre lesquelles sont généralement disposées dans l'ordre une feuille intercalaire en matière plastique, des bandes d'amenée du courant et un revêtement électroconducteur. Ces bandes conductrices à base d'argent, d'une épaisseur pouvant varier généralement entre 15 et 30 µm sont déposées sur la bordure d'émail par sérigraphie à partir, par exemple, d'une suspension d'argent métallique finement divisé et une fritte à bas point de fusion dans un liant organique. Ces bandes conductrices à l'argent peuvent être aussi en limite de l'émail, en partie sur l'émail et en partie sur le revêtement électroconducteur.

Après séchage, par exemple, par exposition aux UV ou IR, la bande conductrice à base d'argent est cuite pour lui conférer sa solidité finale.

On peut aussi utiliser, pour alimenter électriquement le revêtement électroconducteur, des clinquants métalliques.

Ces clinquants métalliques sont généralement placés entre le revetement électroconducteur et la feuille de matière plastique. Ils peuvent être fixés au revêtement électroconducteur par une couche d'adhésif conducteur de l'électricité. Ils peuvent aussi être fixés directement sur la feuille de matière plastique, par exemple par soudage. Dans ce cas, les clinquants métalliques sont mis en contact avec le revêtement électroconducteur lors de l'assemblage, par pressage à chaud, de la feuille de matière plastique et du support.

La fixation des clinquants sur la feuille de matière plastique peut être obtenue par soudage par points espacés, assurant la solidarisation des clinquants sur la feuille de matière plastique, puis, avantageusement, d'un lissage continu des clinquants sur toute la longueur avec la panne chaude du fer à souder, pour renforcer la solidarisation et assurer la planéité des clinquants.

En outre, le maintien en contact des clinquants métalliques avec le revêtement électroconducteur peut être renforcé par une encapsulation du vitrage. On réalise ainsi in-situ, par coulée ou injection de matières organiques dans un moule, un cadre au vitrage. Ce cadre peut aussi servir à renforcer l'isolation électrique et, en outre, à faire cheminer, en son sein, les clinquants métalliques jusqu'à un endroit désiré pour leur sortie du vitrage.

Ces clinquants métalliques ont leur extrémité qui se prolonge hors du vitrage pour permettre leur raccord à la source électrique. Avantageusement, les extrémités des clinquants sont munies d'une isolation électrique pour éviter tout court-circuit.

Généralement, les clinquants métalliques sont disposés, horizontalement, l'un à proximité du bord supérieur du vitrage, notamment du pare-brise, l'autre à proximité du bord inférieur du vitrage.

Avantageusement, les clinquants métalliques sont disposés à distance des bords du vitrage, par exemple à 5 mm environ, au moins pour éviter tout risque de délamination du vitrage feuilleté obtenu. Toutefois, dans la mesure où le vitrage est encapsulé, ce risque de délamination est réduit et les bandes d'amenée du courant peuvent être placées plus près du bord du vitrage.

Les clinquants métalliques étant placés l'un près du bord supérieur du vitrage et l'autre près du bord inférieur, leurs extrémités se trouvent séparées par la largeur du vitrage. Il peut être souhaitable que les extrémités des clinquants se situent sensiblement au même endroit, pour faciliter le raccord à la source électrique. Pour cela, on peut prolonger l'un des clinquants et faire passer ce prolongement sur l'autre face de la feuille de matière plastique, au travers d'une échancrure, et on le fait cheminer, plaqué contre cette autre face de la feuille de matière plastique, par exemple par soudage par points espacés, le long du bord de cette feuille, suivant une direction sensiblement perpendiculaire aux deux clinquants horizontaux disposés sur les bords supérieur et inférieur du vitrage, jusqu'à l'endroit prévu pour la sortie des extrémités des clinquants. Dans ce cas, le prolongement du clinquant est isolé. Les extrémités des deux clinquants métalliques, isolées l'une de l'autre, sont alors en place pour sortir du vitrage sensiblement au même endroit. Bien entendu, la même opération peut être effectuée sur les extrémités des deux clinquants métalliques si la sortie commune n'est pas dans le prolongement de l'une des bandes d'amenée du courant.

Pour que les extrémités des clinquants métalliques se situent sensiblement au même endroit de sortie, il est aussi possible de fixer le prolongement du clinquant métallique sur la même face de la feuille plastique que celle portant les branches horizontales des clinquants et de ne pas déposer de revêtement électroconducteur, par exemple par masquage lors du dépôt de ce revêtement, sur le bord du vitrage correspondant au trajet de cheminement du prolongement du clinquant dont on veut amener l'extrémité au voisinage de l'extrémité de sortie de l'autre clinquant. Ainsi, sur ce bord du vitrage, le prolongement du clinquant métallique, ne sera pas au contact du revetement électroconducteur, mais directement en contact avec l'émail décoratif.

Un autre mode de réalisation, lorsque le prolongement du clinquant métallique se situe sur la même face de la feuille plastique que les branches horizontales des clinquants, est de disposer une couche isolante entre le revêtement électroconducteur (déposé alors sur toute la surface du support) et le prolongement du clinquant métallique.

Comme clinquants métalliques, on utilise avantageusement des clinquants en cuivre, de préférence étamé. Ces clinquants ont généralement une épaisseur de l'ordre du dixième de millimètre, par exemple environ 80 µm, et une largeur d'environ 0,5 à 1 cm, par exemple 0,8 cm. Des clinquants en cuivre étamé, sous la forme de 0,8 cm de large et de 80 µm environ d'épaisseur, ont une résistance par mètre de longueur de 0,025 ohm environ.

Les feuilles de matière plastique transparentes, formées des deux couches de matériau thermoplastique et de matériau thermodurcissable, utiles pour réaliser l'invention, sont décrites notamment aux demandes de brevets européens 54 491, 132 198, 133 090 ainsi qu'au brevet français FR 2 398 606 déjà mentionné.

La feuille de matière plastique peut aussi présenter un indice de réfraction supérieur à celui de l'air et plus proche de celui de la couche électroconductrice, notamment, de la couche d'ITO, que de l'indice de l'air, comme il est décrit à la demande de brevet français FR 88 10 138 déposée le 27 Juillet 1988 au nom de la Demanderesse. Une telle feuille de matière plastique, lorsqu'elle adhère à la couche électroconductrice, particulièrement une couche d'ITO obtenue par pyrolyse de poudres, permet de rendre invisibles les éventuels défauts (mouchetis, voile) de la couche.

Au dessin annexé, donné à titre d'exemples,
- la figure 1 représente, en vue éclatée, et en perspective, un premier mode de réalisation de l'invention, la figure la représente une coupe, suivant la direction A-A du vitrage de la figure 1,
- les figures 2 à 4 représentent, en coupe, des modes de réalisation suivant l'invention,
- la figure 5 représente, en vue éclatée et en perspective, un vitrage selon l'invention muni de ses amenées de courant.

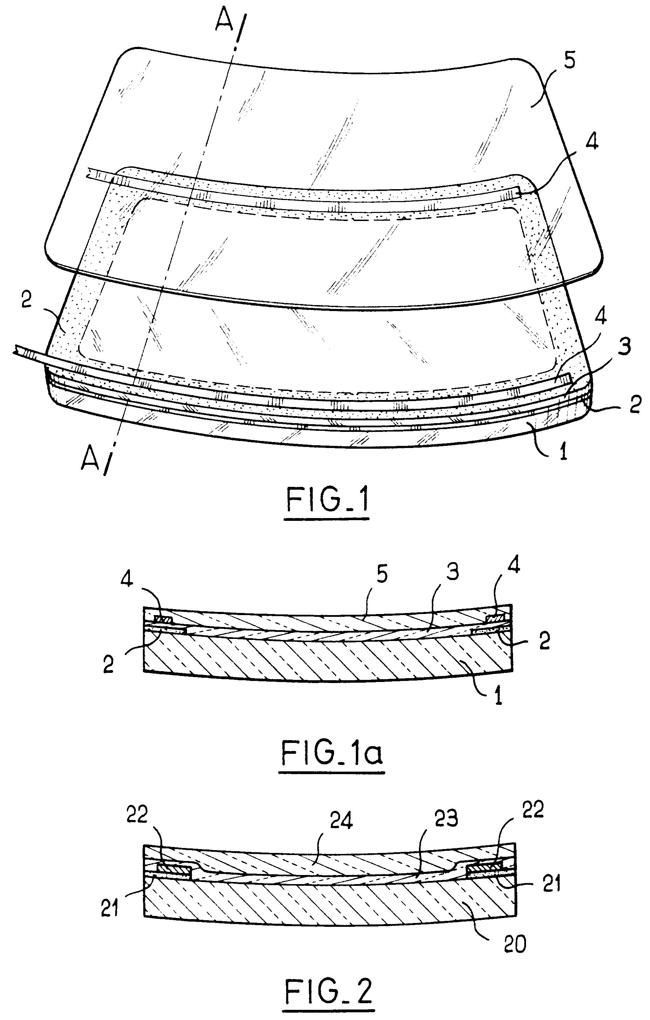

La figure 1 représente, en vue éclatée et en perspective, un vitrage selon l'invention.

La figure 1a montre une coupe suivant A-A de ce vitrage.

Le vitrage représenté aux figures 1 et la comprend une plaque de verre (1), une bordure décorative en émail coloré (2), de préférence noir, un revêtement électroconducteur (3) et des bandes d'amenée du courant électrique sous forme de clinquants métalliques (4), notamment en cuivre étamé. Ces clinquants (4) sont disposés dans la zone correspondant à la bordure d'émail noir (2), sur les bords supérieur et inférieur du vitrage. Le vitrage comprend en outre une feuille de matière plastique (5) comprenant au moins une couche de polyuréthane telle que décrite précédemment.

Pour la fabrication d'un tel vitrage, le support en verre (1) clair ou coloré, comme décrit précédemment, est prédécoupé aux dimensions voulues pour le vitrage final.

Sur le bord du support en verre, est déposée la couche d'émail noir (2), par sérigraphie, pour former un cadre décoratif destiné à cacher la vue, de l'extérieur, des bandes d'amenée du courant et la colle ou l'adhésif servant à fixer le vitrage à la baie de la carrosserie de l'automobile par l'exemple. La couche d'émail (2) est séchée par exposition aux UV, IR ou aux microondes. Cette couche d'émail (2) est recuite, notamment, si le revêtement électroconducteur (3) est ensuite déposé sous vide. Si le revêtement électroconducteur (3) est formé par pyrolyse, le recuit de l'émail (2), a lieu pendant la phase de réchauffement du support jusqu'à une température de 600°C environ nécessaire au dépôt par pyrolyse du revêtement électroconducteur.

Si le vitrage doit être bombé, en vue notamment de son utilisation dans des automobiles, le support de verre, est bombé à la forme souhaitée, à une température d'environ 600°C, après le dépôt de la couche d'émail (2) si le revêtement électroconducteur (3) doit être déposé sous vide. Si le revêtement électroconducteur (3) est constitué par de l'ITO déposé par pyrolyse, le bombage peut avoir lieu après le dépôt de ce revêtement. En effet, une telle couche d'ITO présente l'avantage d'être très résistante et de pouvoir supporter le bombage sans dommage.

Si le revêtement électroconducteur est constitué par de l'ITO, on peut alors lui faire subir un traitement thermique en atmosphère réductrice, tel que décrit précédemment, pour améliorer ses caractéristiques de conduction de l'électricité.

Les clinquants métalliques (4) utilisés comme moyens d'amenée du courant, dans ce mode de réalisation des figures 1 et la, sont fixés comme décrit précédemment, soit sur le revêtement électroconducteur (3) par exemple, par l'intermédiaire d'un adhésif conducteur, ou bien sur la feuille de matière plastique (5) par soudage.

Le support de verre (1) muni de ses différentes couches est alors assemblé à une feuille de matière plastique (5) telle que décrite précédemment, à chaud et sous pression d'une manière connue.

La figure (2) représente une vue en coupe d'un autre mode de réalisation d'un vitrage selon l'invention. Il comprend un support (20) en verre par exemple clair ou coloré, une bordure d'émail (21), de préférence noir, déposée par sérigraphie à la périphérie du support de verre, une bande conductrice à base d'argent (22) déposée par sérigraphie sur la bordure d'émail et légèrement en retrait par rapport au bord du support de verre, un revêtement (23) conducteur de l'électricité et une feuille de matière plastique (24) comprenant au moins une couche de polyuréthane telle que définie précédemment.

Les étapes pour la fabrication d'un tel vitrage peuvent être celles décrites précédemment pour le vitrage de la figure 1, notamment pour le dépôt de la bordure d'émail (21), celui du revêtement électroconducteur (23) et l'assemblage avec la feuille de matière plastique (24).

A la différence du vitrage des figures 1 et la, les bandes d'amenée de courant électrique sont, dans le présent mode de réalisation de la figure 2, des bandes conductrices à base d'argent (22), au lieu de clinquants en cuivre. Dans ce cas, la bande conductrice (22) à base d'argent déposée par sérigraphie à partir d'une composition telle que décrite précédemment, peut être appliquée après la cuisson de l'émail noir (21). Elle peut être aussi déposée sur l'émail noir (21) immédiatement après le séchage de l'émail, la cuisson de l'émail (21) et de la bande conductrice (22) ayant lieu alors simultanément. Comme indiqué pour le vitrage des figures 1 et la, suivant le revêtement électroconducteur (23) appliqué ensuite, la cuisson de la bande conductrice à base d'argent (22) et éventuellement celle de l'émail noir (21) a lieu après le séchage de la bande conductrice à l'argent (22) (revêtement déposé sous vide) ou bien lors de la montée en température du support pour la pyrolyse des composants du revêtement électroconducteur.

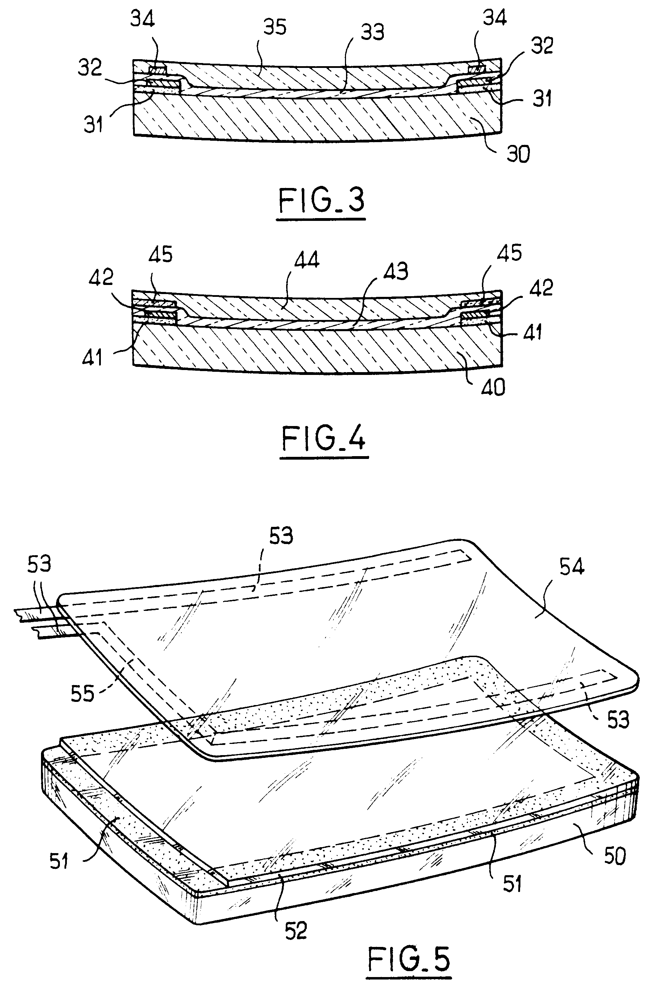

La figure 3 représente un autre mode de réalisation selon l'invention. Il comprend un support (30) en verre par exemple, clair ou coloré, une bordure en émail de préférence noir (31), des bandes d'amenée du courant (32) sous forme de bandes conductrices à l'argent déposées par sérigraphie sur la couche d'émail (31) et en position légèrement décalée vers l'intérieur par rapport au bord du vitrage, un revêtement électroconducteur (33), des clinquants métalliques (34), appliqués pour être dans une zone correspondante à celle des bandes conductrices à l'argent (32) et une feuille de matière plastique (35) comprenant au moins une couche de polyuréthane. Dans ce cas, la face des clinquants, orientée vers la feuille de matière plastique peut être, par exemple, peinte en noir, pour cacher, de l'intérieur du véhicule muni de ce vitrage, les bandes d'amenée du courant.

Le dépôt des couches d'émail, des bandes conductrices à l'argent et du revêtement électroconducteur peut être effectué comme pour le vitrage de la figure 2. Les clinquants métalliques, comme indiqué précédemment pour le vitrage, des figures 1 et 1a, peuvent être fixés sur une face de la feuille de matière plastique (35) avant son assemblage avec le support de verre et ses différentes couches ou bien directement sur le revêtement électroconducteur (33) par le moyen d'un adhésif conducteur.

La figure 4 représente un autre mode de réalisation d'un vitrage selon l'invention.

Ce vitrage comprend les éléments décrits à la figure 2, c'est-à-dire un support (40), en verre par exemple, clair ou coloré, une bordure d'émail (41) coloré, de préférence noir, déposée par sérigraphie sur le support, des bandes conductrices à l'argent (42), un revêtement électroconducteur (43) et une feuille de matière plastique (44). Ce vitrage comprend en outre une couche d'adhésif (45) coloré, de préférence noir, pour maintenir le revêtement électroconducteur (43) et la feuille de matière plastique (44). Cette couche d'adhésif noir (45), déposée dans une zone correspondant à la zone occupée par les bandes d'amenée de courant électrique (42), sert aussi à cacher la vue de ces bandes conductrices à l'argent du côté de la face du vitrage portant la feuille de matière plastique transparente.

Bien que les autres modes de réalisation n'aient pas été décrits comme comprenant cette couche d'adhésif noir, il est bien entendu qu'ils peuvent la contenir si l'utilisation du vitrage envisagée le nécessite.

La figure 5 représente, en vue éclatée et en perspective, un vitrage dans lequel les bandes d'amenée du courant électrique sont des clinquants métalliques dont l'un de ceux-ci est prolongé pour que les extrémités des deux clinquants sortent du vitrage sensiblement au même endroit.

Sur cette figure 5, le support (50) en verre par exemple, clair ou coloré, porte une bordure (51) d'émail coloré, de préférence noir, un revêtement électroconducteur (52). La feuille de matière plastique (54) non encore assemblée à support (50) est muni de bandes d'amenée du courant (53) sous forme de clinquants métalliques, fixés à la surface de la feuille par soudage par points espacés par exemple.

Comme décrit précédemment, pour amener les extrémités de ces clinquants sensiblement au même endroit pour faciliter leur raccord à la source électrique, l'un des clinquants, par exemple celui situé le long du bord inférieur du vitrage, comprend un prolongement (55) qui longe le bord de la feuille de matière plastique suivant une direction sensiblement perpendiculaire aux branches des deux clinquants métalliques occupant une position horizontale le long des bords supérieur et inférieur du vitrage, jusqu'à l'endroit prévu pour la sortie des extrémités des deux clinquants. Dans ce cas, la zone du support de verre correspondant à celle de la fixation de ce prolongement (55) n'est pas recouverte de revêtement électroconducteur (52).

Comme indiqué précédemment, lorsque le revêtement électroconducteur recouvre toute la surface du support (50), une couche isolante peut être disposée entre le revêtement et le prolongement du clinquant.

Ce mode de réalisation représenté à la figure 5 peut être utilisé pour tout mode de réalisation de vitrage dans lequel les bandes d'amenée du courant sont constituées par des clinquants métalliques.

Comme indiqué précédemment, mais non représenté sur une figure, le prolongement (55) d'un des clinquants métalliques peut traverser la feuille de matière plastique (54) par une échancrure et être fixé sur l'autre face de la feuille, par exemple par soudage par points espacés.

Dans ce cas, le prolongement du clinquant est recouvert d'une matière isolante.

## Revendications

1. Vitrage feuilleté pour automobile formé d'un support monolithique ou feuilleté, en verre et/ou en matière plastique, présentant, sur une face, une bordure émaillée colorée et une feuille de matière plastique comprenant au moins une couche de polyuréthane, caractérisé en ce qu'il comprend, en outre, un revêtement électroconducteur constitué par une couche de SnO₂ dopé ou d'oxyde d'indium-étain ou par un empilement de couches minces comprenant essentiellement une couche métallique tel que l'argent insérée entre deux couches diélectriques et, en outre, des moyens d'amenée du courant électrique.

2. Vitrage conforme à la revendication 1, caractérisé en ce que les moyens d'amenée du courant électrique sont constitués par des clinquants métalliques et/ou des bandes conductrices sérigraphiées, situés dans les parties supérieure et inférieure du vitrage.

3. Vitrage conforme à la revendication 2, caractérisé en ce que les moyens d'amenée du courant électrique sont constitués par des clinquants en cuivre et/ou des bandes conductrices sérigraphiées à base d'argent.

4. Vitrage conforme à l'une quelconque des revendications 1 à 3, caractérisé en ce que la feuille de matière plastique comprend une couche de matière thermoplastique à propriété d'absorbeur d'énergie et une couche de matière thermodurcissable présentant des propriétés d'antilacération et d'autocicatrisation.

5. Vitrage conforme à l'une quelconque des revendications 1 à 4, caractérisé en ce qu'il comprend un support de verre coloré type "TSA" ou "TSA²⁺".

6. Vitrage conforme à l'une quelconque des revendications 1 à 5, caractérisé en ce qu'il comprend un support de verre, portant dans l'ordre, la bordure émaillée, le revêtement électroconducteur, un clinquant de cuivre disposée dans la zone de la bordure émaillée et la feuille de matière plastique.

7. Vitrage conforme à l'une quelconque des revendications 1 à 5, caractérisé en ce qu'il comprend un support de verre et, dans l'ordre, une bordure émaillée, une bande conductrice sérigraphiée à base d'argent disposée sur la bordure émaillée, un revêtement électroconducteur et la feuille de matière plastique.

8. Vitrage selon la revendication 7, caractérisé en ce qu'il comprend en outre, un clinquant de cuivre disposé entre le revêtement électroconducteur et la feuille de matière plastique dans la zone de la bordure émaillée et de la bande conductrice sérigraphiée à base d'argent.

9. Vitrage conforme à l'une quelconque des revendications 1 à 8, caractérisé en ce que la bordure émaillée est conductrice de l'électricité.

10. Vitrage conforme à l'une quelconque des revendications 6 à 9, caractérisé en ce qu'il comprend en outre un adhésif de couleur disposé au contact de la feuille de matière plastique et dans la zone correspondant à l'emplacement des moyens d'amenée de courant ou au contact direct de ces moyens d'amenée du courant.

11. Vitrage conforme à l'une quelconque des revendications 1 à 10, caractérisé en ce qu'il comprend un profilé plastique, recouvrant le bord du vitrage pour assurer le maintien des différents éléments constituant le vitrage.

12. Vitrage selon la revendication 11, caractérisé en ce que le profilé plastique est un cadre d'encapsulation.

## Claims

1. Laminated window formed from a monolithic or laminated support made from glass and/or a plastics material and having on one face a coloured enamel border and a plastics material sheet incorporating at least one polyurethane layer, characterized in that it also comprises an electrically conductive coating constituted by a layer of doped SnO₂ or indium-tin oxide or by a stack of thin layers essentially comprising a metal layer such as silver inserted between two dielectric layers, as well as current supply means.

2. Window according to claim 1, characterized in that the current supply means are constituted by metal foils and/or screen process printed conductive strips located in the upper and lower portions of the window.

3. Window according to claim 2, characterized in that the current supply means are constituted by copper coils and/or silver-based screen process printed conductive strips.

4. Window according to any one of the claims 1 to 3, characterized in that the plastics material sheet comprises a thermoplastic material layer having energy absorption properties and a thermosetting material layer having antilaceration and self-healing properties.

5. Window according to any one of the claims 1 to 4, characterized in that it comprises a coloured glass support of the TSA or TSA²⁺ type.

6. Window according to any one of the claims 1 to 5, characterized in that it comprises a glass support carrying in succession the enamel border, the electrically conductive coating, a copper foil located in the area of the enamel border and the plastics material sheet.

7. Window according to any one of the claims 1 to 5, characterized in that it comprises a glass support and in succession an enamel border, a silver-based, screen process printed conductive strip placed on the enamel border, an electrically conductive coating and the plastics material sheet.

8. Window according to claim 7, characterized in that it also comprises a copper foil placed between the electrically conductive coating and the plastics material sheet in the area of the enamel border and the silver-based, screen process printed conductive strip.

9. Window according to any one of the claims 1 to 8, characterized in that the enamel border conducts electricity.

10. Window according to any one of the claims 6 to 9, characterized in that it also comprises a coloured adhesive in contact with the plastics material sheet and in the zone corresponding to the location of the current supply means at or in direct contact with said current supply means.

11. Window according to any one of the claims 1 to 10, characterized in that it comprises a plastic profile covering the edge of the window in order to ensure that the different elements constituting the window are maintained in place.

12. Window according to claim 11, characterized in that the plastic profile is an encapsulation frame.

## Patentansprüche

1. Verbundverglasung für Kraftfahrzeuge, gebildet aus einem einschichtigen oder Verbundträgermaterial aus Glas und/oder Kunststoff, das auf einer Seite eine eingefärbte Emailumrandung und eine Kunststoffolie aufweist, die wenigstens eine Polyurethanschicht enthält, **dadurch gekennzeichnet, daß** sie außerdem eine elektrisch leitfähige Beschichtung, die aus einer dotierten SnO₂- oder einer Zinn-Indiumoxid-Schicht oder einem Aufbau aus dünnen Schichten besteht, der im wesentlichen eine Schicht aus einem Metall wie Silber enthält, die sich zwischen zwei dielektrischen Schichten befindet, und zusätzlich Zuführungsmittel für den elektrischen Strom umfaßt.

2. Verglasung nach Anspruch 1, **dadurch gekennzeichnet, daß** die Zuführungsmittel für den elektrischen Strom aus Metallfolien und/oder mittels Siebdruck aufgebrachten leitfähigen Bändern bestehen, die sich im oberen und unteren Teil der Verglasung befinden.

3. Verglasung nach Anspruch 2, **dadurch gekennzeichnet daß** die Zuführungsmittel für den elektrischen Strom aus Kupferfolien und/oder mittels Siebdruck aufgebrachten leitfähigen Bändern auf Silbergrundlage bestehen.

4. Verglasung nach einem der Ansprüche 1 bis 3, **dadurch gekennzeichnet, daß** die Kunststoffolie eine Thermoplastschicht mit energieabsorbierenden Eigenschaften und eine Duroplastschicht, die reißfeste und selbstheilende Eigenschaften besitzt, enthält.

5. Verglasung nach einem der Ansprüche 1 bis 4, **dadurch gekennzeichnet, daß** sie ein eingefärbtes Glasträgermaterial vom Typ "TSA" oder "TSA²⁺" enthält.

6. Verglasung nach einem der Ansprüche 1 bis 5, **dadurch gekennzeichnet, daß** sie ein Glasträgermaterial enthält, das in folgender Reihenfolge die Emailumrandung, die elektrisch leitfähige Beschichtung, eine im Bereich der Emailumrandung angeordnete Kupferfolie und die Kunststoffolie trägt.

7. Verglasung nach einem der Ansprüche 1 bis 5, **dadurch gekennzeichnet, daß** sie ein Glasträgermaterial und in folgender Reihenfolge eine Emailumrandung, ein mittels Siebdruck aufgebrachtes leitfähiges Band auf Silbergrundlage, das auf der Emailumrandung angeordnet ist, eine elektrisch leitfähige Beschichtung und die Kunststoffolie umfaßt.

8. Verglasung nach Anspruch 7, **dadurch gekennzeichnet, daß** sie außerdem eine Kupferfolie umfaßt, die im Bereich der Emailumrandung und des mittels Siebdruck aufgebrachten leitfähigen Bandes auf Silbergrundlage zwischen elektrisch leitfähiger Beschichtung und Kunststoffolie angeordnet ist.

9. Verglasung nach einem der Ansprüche 1 bis 8, **dadurch gekennzeichnet, daß** die Emailumrandung den elektrischen Strom leitet.

10. Verglasung nach einem der Ansprüche 6 bis 9, **dadurch gekennzeichnet, daß** sie darüber hinaus einen gefärbten Klebstoff umfaßt, der im Kontakt mit der Kunststoffolie in dem Bereich, welcher der Stelle der Stromzuführungsmittel entspricht, oder im direkten Kontakt mit diesen Stromzuführungsmitteln angeordnet ist.

11. Verglasung nach einem der Ansprüche 1 bis 10, **dadurch gekennzeichnet, daß** sie ein Kunststoffprofil umfaßt, das ihren Rand bedeckt, um den Zusammenhalt der verschiedenen Elemente sicherzustellen, welche die Verglasung bilden.

12. Verglasung nach Anspruch 11, **dadurch gekennzeichnet, daß** das Kunststoffprofil einen Ummantelungsrahmen bildet.
